**Europäisches Patentamt**

**European Patent Office**

**Office européen des brevets**

(11) Veröffentlichungsnummer: **0 263 227**
**A1**

(12) **EUROPÄISCHE PATENTANMELDUNG**

(21) Anmeldenummer: **86890270.1**

(22) Anmeldetag: **06.10.86**

(51) Int. Cl.⁴: **G11B 23/023**

(43) Veröffentlichungstag der Anmeldung:
**13.04.88 Patentblatt 88/15**

(84) Benannte Vertragsstaaten:
**AT BE CH DE ES FR GB IT LI NL SE**

(71) Anmelder: **Ernst Stadelmann Gesellschaft m.b.H.**
**Bahnhofstrasse 8**
**A-4070 Eferding(AT)**

(72) Erfinder: **Kirchner, Balthasar**
**Bahnhofstrasse 8**
**A-4070 Eferding(AT)**
Erfinder: **Schleicher, Siegfried**
**Bahnhofstrasse 8**
**A-4070 Eferding(AT)**

(74) Vertreter: **Hübscher, Gerhard, Dipl.-Ing. et al**
**Patentanwälte Dipl.-Ing. Gerhard Hübscher**
**Dipl.-Ing. Helmut Hübscher Dipl.-Ing. Heiner**
**Hübscher Spittelwiese 7 .**
**A-4020 Linz(AT)**

(54) **Behälter für Magnetbandkassetten od. dgl.**

㊼ Ein Behälter (1) für Magnetbandkassetten (K1, K2) ist mit mehreren hintereinandergereihten Aufnahmen (2) zum Einschieben der Kassetten ausgestattet, welche Aufnahmen (2) aus entlang den Seitenwänden (3) angeordneten, einander paarweise gegenüberliegenden Führungen (4) bestehen. Die Führungen (4) bilden zur Kipphalterung der sich bodenwärts auf Auflagern (9) abstützenden Kassetten (K1) jeweils eine die Kippachse bestimmende Engstelle (5) und den Kippwinkel begrenzende Anschläge (8).

Um sowohl unverpackte als auch verpackte Kassetten (K1, K2) ordnungsgemäß unterbringen zu können, weisen die Engstellen (5) eine der Kassettenstärke gegenüber verbreiterte, an eine Kassettenverpackung angepaßte Weite auf und im Höhenbereich zwischen Engstellen (5) und Auflagern (9) sind die Führungen (4) vertiefende, an die Kassettenverpackung anpassende Absätze (10) vorgesehen.

FIG.1

## Behälter für Magnetbandkassetten od.dgl.

Die Erfindung bezieht sich auf einen Behälter für Magnetbandkassetten od.dgl., mit mehreren hintereinandergereihten Aufnahmen zum Einschieben der Kassetten aus entlang den Seitenwänden angeordneten, einander paarweise gegenüberliegenden Führungen, die zur Kipphalterung der sich bodenwärts auf Auflagern abstützenden Kassetten jeweils eine die Kippachse bestimmende Engstelle und den Kippwinkel begrenzende Anschläge bilden.

Um Magnetbandkassetten mit ihren sehr empfindlichen Magnetbändern geschützt aufbewahren zu können, gibt es bereits spezielle Behälter verschiedenster Bauart, die hintereinandergereihte Aufnahmen zum Einschieben der entsprechenden Kassetten aufweisen. Gemäß der EP-A1-0 162 999 ist auch schon ein Behälter bekannt, dessen Aufnahmen aus paarweise einander gegenüberliegenden Führungen bestehen und zur Erhöhung des Entnahme-und Bedienungskomforts durch Engstellen und Anschläge der Führungen für die Kassetten Kipplager bilden, so daß sich die in die Aufnahmen eingeschobenen Kassetten ähnlich einer Blockkartei handhaben und durch Kippen gewissermaßen der Reihe nach durchblättern lassen. Das Auffinden einzelner bestimmter Kassetten bereitet damit keine Mühen und es wird auch ein bequemes,schonendes Entnehmen der gesuchten Kassette ermöglicht. Allerdings ist dieser Behälter mit seinen Aufnahmen auf blanke Kassetten abgestimmt und erlaubt kein Aufbewahren in einer zusätzlichen Verpackung steckender Kassetten. Einige Hersteller von Magnetbandkassetten, die vor allem zur Datenspeicherung Verwendung finden sollen, empfehlen zum besonderen Schutz der heiklen Aufzeichnungsträger, die Kassetten auf jeden Fall bis unmittelbar vor dem Einsatz im entsprechenden Gerät in der mitgelieferten Schutzschachtel oder dem einfacheren Einschubkarton zu belassen und die Kassetten daher auch mit Schutzschachtel oder Einschubkarton zu archivieren und in den dazu vorgesehenen Behältern einzuordnen. Eine solche Aufbewahrung verlangt aber eigene, auf die jeweils vorhandene Dimension des zu archivierenden Gegenstandes abgestimmte Behälter, was den Herstellungsaufwand vergrößert, das Behälterangebot unüberschaubar werden läßt, die Lagerhaltung mehrerer Behältergrößen verlangt und auch den Archivar zur Benützung mehrerer Behälter für die Aufbewahrung der Magnetbandkassetten zwingt.

Der Erfindung liegt daher die Aufgabe zugrunde, diese Mängel zu beseitigen und einen Behälter der eingangs geschilderten Art mit einfachen Mitteln so zu verbessern, daß er zur Aufnahme blanker oder verpackter Kassetten geeignet ist und außerdem unabhängig von einer Verpackung stets einer gleichbleibenden Anzahl von kassetten Platz bietet.

Die Erfindung löst diese Aufgabe dadurch, daß die Engstellen eine der Kassettenstärke gegenüber verbreiterte, an eine Kassettenverpackung angepaßte Weite aufweisen und im Höhenbereich zwischen Engstellen und Auflagern die Führungen vertiefende, an die Kassettenverpackung anpassende Absätze vorgesehen sind. Durch diese ohne großen Mehraufwand herstellbaren Maßnahmen können in ein und derselben Aufnahme des Behälters wahlweise blanke oder verpackte Kassetten eingesetzt werden, wobei blanke Kassetten kippbar bleiben und sich blockkarteimäßig handhaben lassen, die in den Schachteln verpackten Kassetten aber durch die erweiterten Engstellen stehend gehalten sind. Da die Schachtelrücken Beschriftungsmöglichkeiten bieten, ist für diese verpackten Kassetten das Blättern nicht so wichtig, wobei sich die Schachteln auf den gegenüber den Auflagern erhöhten Absätzen abstützen und dadurch auch gut faßbar sind. Die zurückspringenden Absätze gestatten aber nicht nur eine saubere Halterung der Kassettenschachtel in den Aufnahmen, sondern sie erlauben auch im Bereich zwischen den Absätzen und den bodenseitigen Auflagern ein Zusammenrücken der Führungsstirnwände, so daß die blanken Kassetten ohne zu großes Seitenbewegungsspiel in den Aufnahmen sitzen. Wird dieses Seitenbewegungsspiel etwas vergrössert und auf die Dimensionierung der Einschubkartons für die Kassetten abgestimmt, dann lassen sich auch die kartonverpackten Kassetten bis zu den bodenseitigen Auflagern in die Aufnahmen einschieben und kippbar lagern. Es entsteht daher ein Behälter, der entweder blanke Kassetten und in Einschubkartons verpackte Kassetten kippbar oder in Schachteln verpackte Kassetten feststehend aufnehmen kann, wobei selbstverständlich in einem Behälter nur unverpackte oder verpackte, genausogut aber gleichzeitig unverpackte und beliebig verpackte Kassetten unterzubringen sind.

Bilden erfindungsgemäß die Führungen Wangen, die im Bereich der Engstellen sich erstreckende Vertikalabschnitte und ober-und unterhalb des Engstellenbereiches zur Vertikalen um den gleichen Winkel geneigte Schrägabschnitte aufweisen, wird eine funtionsgerechte Halterung der Kassetten erreicht und es kommt unabhängig von einer gegebenenfalls vorhandenen Verpackung zu einem störungsfreien, problemlosen Handhaben der Kassetten.

Günstig ist es auch, wenn die Absätze zu den Auflagern hin abfallende Leitflächen bilden, da diese Leitflächen beim Einschieben blanker oder kartonverpackter Kassetten ein ungewolltes Hängenbleiben an den Absätzen verhindern.

In der Zeichnung ist der Erfindungsgegenstand schematisch in einem Ausführungsbeispiel dargestellt, und zwar zeigen

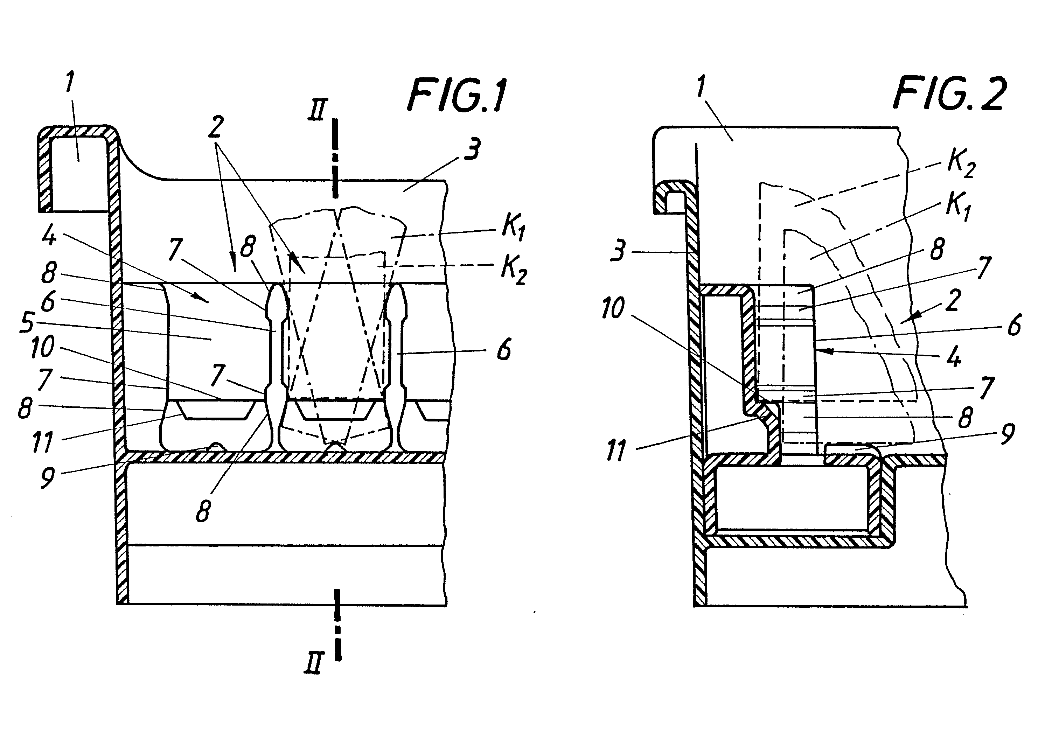

Fig. 1 einen Teil eines erfindungsgemäßen Behälters im Längsschnitt und

Fig. 2 einen Querschnitt nach der Linie II-II der Fig. 1.

Ein ohne Deckel angedeuteter Behälter 1 besitzt mehrere hintereinandergereihte Aufnahmen 2 zum Einschieben von verpackten und/oder unverpackten Magnetbandkassetten K1, K2, welche Aufnahmen aus entlang der einander gegenüberliegenden Seitenwände 3 angeordneten, paarweise zusammengehörenden Führungen 4 bestehen. Die Führungen 4 bilden Engstellen 5, deren Weite gegenüber der Stärke der blanken Kassette K1 verbreitert und an die in einer Schachtelk verpackten Kassetten K2 angepaßt ist, wobei Wangen 6 der Führungen 4 sich im Bereich der Engstellen 5 erstreckende Vertikalabschnitte 7 und ober-und unterhalb des Engstellenbereiches zu den Vertikalabschnitten 7 jeweils um den gleichen Winkel ge neigte Schrägabschnitte 8 aufweisen. Bodenseitig gibt es in den Aufnahmen 2 mittig vorstehende Auflager 9 für die Kassetten K1 und außerdem sind im Höhenbereich zwischen den Engstellen 5 und den Auflagern 9 die Führungen 4 vertiefende, an die Kassettenschachteln K2 angepaßte Absätze 10 mit zu den Auflagern 9 hin abfallendenLeitflächen 11 vorgesehen.

Die Aufnahmen2 des Behälters 1 eignen sich zur Halterung von verpackten und unverpackten Kassetten K1, K2. Wird eine unverpackte blanke Kassette K1 eingesetzt, entsteht für diese sich auf den Auflagern 9 abstützenden Kassetten K1 durch die Führungen 4 ein Kipplager, wobei die Engstellen 5 die Kippachse bestimmen und die Schrägabschnitte 8 der Führungswangen 6 die Kippwinkel begrenzende Anschläge ergeben. Die Kipplagerung für die unverpackten Kassetten K1 erlaubt eine blockkarteiähnliche Handhabung der Kassetten, die ein rasches und bequemes Auffinden und Einordnen der einzelnen Kassetten ermöglicht. Bei geeignetem Führungsspiel für die blanken Kassetten K1 lassen sich die gleichen Verhältnisse auch für dünnverpackte Kassetten, beispielsweise für in Einschubkartons untergebrachte Kassetten, verwirklichen.

Sind allerdings in eigenen Schutzschachteln eingelegte Kassetten K2 vorhanden, müssen die Kassettenschachteln vertikal in die Aufnahmen 2 eingeschoben werden, wo sie auf den Absätzen 10 aufruhen und zwischen den Vertikalabschnitten 7 der Führungswangen 6 einen festen Halt finden.

Der erfindungsgemäße Behälter 1 erlaubt mit seinen Aufnahmen 2 das Einordnen sowohl unverpackter als auch verpackten Kassetten K1, K2, wobei die Aufnahmemenge unabhängig von der Verpackung bleibt.

## Ansprüche

1. Behälter (1) für Magnetbandkassetten od.dgl., mit mehreren hintereinandergereihten Aufnahmen (2) zum Einschieben der Kassetten (K1, K2) aus entlang den Seitenwänden (3) angeordneten, einander paarweise gegenüberliegenden Führungen (4), die zur Kipphalterung der sich bodenwärts auf Auflagern (9) abstützenden Kassetten (K1) jeweils eine die Kippachse bestimmende Engstelle (5) und den Kippwinkel begrenzende Anschläge (8) bilden, dadurch gekennzeichnet, daß die Engstellen (5) eine der Kassettenstärke gegenüber verbreiterte, an eine Kassettenverpackung angepaßte Weite aufweisen und im Höhenbereich zwischen Engstellen (5) und Auflagern (9) die Führungen (4) vertiefende, an die Kassettenverpackung anpassende Absätze (10) vorgesehen sind.

2. Behälter nach Anspruch 1, dadurch gekennzeichnet, daß die Führungen (4) Wangen (6) bilden, die im Bereich der Engstellen (5) sich erstreckende Vertikalabschnitte (7) und ober-und unterhalb des Engstellenbereiches zur Vertikalen um den gleichen Winkel geneigte Schrägabschnitte (8) aufweisen.

3. Behälter nach Anspruch 1 oder 2, dadurch gekennzeichnet, daß die Absätze (10) zu den Auflagern (9) hin abfallende Leitflächen (11) bilden.

FIG.2

FIG.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | WO-A-8 603 327  (LIFT VERKAUFSGERÄTE) <br> * Seiten 29-32; Figuren * | 1-3 | G 11 B   23/023 |
| | --- | | |
| Y | US-A-3 756 383  (K.D.KRYTER) <br> * Zusammenfassung;   Spalte   2, Zeile  12 bis Spalte 3, Zeile 20; Figuren * | 1-3 | |
| | --- | | |
| A | GB-A-1 503 568  (KELRACK) <br> * Seite 2, Zeilen 28-92;   Figuren * | 1-3 | |
| | --- | | |
| D,A | EP-A-0 162 999  (ERNST STADELMANN) <br> * Patentansprüche; Figuren * | 1-3 | |
| | --- | | RECHERCHIERTE SACHGEBIETE (Int. Cl.4) |
| A | EP-A-0 155 258  (LIFT VERKAUFSGERÄTE) <br> * Patentanspruch 1; Figuren * | 1 | G 11 B |
| | --- | | |
| A | US-A-3 907 116  (I.W.WOLF) <br> * Zusammenfassung; Figuren * | 1 | |
| | --- | | |
| A | US-A-4 432 453  (J.L.BERKMAN) | | |
| | --- | | |
| A | FR-A-2 401 783  (RENT DESIGN) | | |
| | ---                      -/- | | |

Der vorliegende Recherchenbericht wurde für alle Patentansprüche erstellt.

| Recherchenort <br> DEN HAAG | Abschlußdatum der Recherche <br> 09-06-1987 | Prüfer <br> DECLAT M.G. |
|---|---|---|

| | **EINSCHLÄGIGE DOKUMENTE** | | Seite 2 |
| --- | --- | --- | --- |
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | EP-A-0 085 911 (AGFA-GEVAERT)<br><br>----- | | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
| --- | --- | --- |
| DEN HAAG | 09-06-1987 | DECLAT M.G. |